# DEMANDE DE BREVET EUROPEEN

(11) **EP 4 202 252 A1**
(43) Date de publication de la demande: **28.06.2023**
(21) Numéro de dépôt: 22214207.7
(22) Date de dépôt: 16.12.2022
(51) Int. Cl.: F16F 1/377, F16F 15/08, B60R 11/00, F16M 11/04, B60R 11/02, B60R 16/023, F16B 5/02, F16B 2/12

(54) **SUPPORT AMORTI POUR MONTAGE D'UN ÉQUIPEMENT SUR UN CHÂSSIS**

(30) Priorité: 23.12.2021 FR 2114319
(71) Demandeur: THALES, 92400 Courbevoie (FR)
(72) Inventeur: RAVAUT, Yannick, 49309 CHOLET (FR); BENNIS, Wissem, 49309 CHOLET (FR); BOBINET, Christophe, 49309 CHOLET (FR)
(74) Mandataire: Atout PI Laplace

(57) **Abrégé**

L'invention se rapporte à un support pour montage d'un équipement sur un châssis, le support comprenant : une première plaque configurée pour être fixée sur le châssis ; une deuxième plaque configurée pour que l'équipement soit fixé dessus ; au moins deux amortisseurs monoblocs qui s'étendent entre une première extrémité fixée à la première plaque et une deuxième extrémité fixée à la deuxième plaque, les au moins deux amortisseurs ayant une structure alvéolaire et étant disposés parallèlement.

## Description

### DOMAINE TECHNIQUE

Cette invention concerne des supports pour montage d'un équipement sur un châssis et, en particulier, des supports comprenant un amortisseur.

### ARRIÈRE-PLAN

L'intégration d'équipements notamment des équipements électroniques sur des véhicules nécessite la filtration des vibrations engendrées par les mouvements du véhicule pour assurer le bon fonctionnement des équipements. Des supports comprenant des amortisseurs tels que des amortisseurs à câble ou des blocs compacts de matériau élastomère permettent de filtrer les hautes fréquences de vibrations. Ce type de support nécessite un mouvement relatif de l'équipement par rapport au châssis du véhicule. A certaines fréquences, une résonnance peut apparaitre dans le déplacement relatif de l'équipement par rapport au châssis entrainant un débattement important. Le débattement est problématique pour les véhicules ayant un espace limité pour intégrer des équipements, comme par exemple les véhicules tout-terrain. En effet, le débattement peut provoquer des dommages sur les équipements ou sur les composants du véhicule environnant les équipements. Plus précisément, lors de débattements importants l'équipement peut heurter d'autres équipements du véhicule et/ou les parois du véhicule. Pour éviter ces heurts, il est nécessaire de prévoir un volume vide entourant l'équipement, volume fonction du débattement maximum de l'équipement par rapport au châssis.

### RÉSUMÉ

Afin de pallier les inconvénients des supports pour l'intégration équipements sur un véhicule, l'invention propose un support pour montage d'un équipement sur un châssis permettant de filtrer les hautes fréquences de vibration et de limiter le débattement. L'invention permet également de limiter l'espace requis pour intégrer l'équipement sur un véhicule.

A cet effet, l'invention a pour objet un support pour montage d'un équipement sur un châssis comprenant un amortisseur ayant une structure alvéolaire.

L'invention vient à améliorer la situation en proposant un support pour montage d'un équipement sur un châssis, le support comprenant : une première plaque configurée pour être fixée sur le châssis ; une deuxième plaque configurée pour que l'équipement soit fixé dessus ; au moins deux amortisseurs monoblocs qui s'étendent entre une première extrémité fixée à la première plaque et une deuxième extrémité fixée à la deuxième plaque, les au moins deux amortisseurs ayant une structure alvéolaire et étant disposés parallèlement.

Dans un mode de réalisation, au moins un des amortisseurs monoblocs comprend une première partie pleine, une partie alvéolaire et une deuxième partie pleine, la première extrémité étant une extrémité de la première partie pleine, la deuxième extrémité étant une extrémité de la deuxième partie pleine et la partie alvéolaire étant entre la première partie pleine et la deuxième partie pleine.

Dans un mode de réalisation, le support comprend des moyens de précontrainte permettant d'appliquer un effort permettant de rapprocher la première plaque et la deuxième plaque, l'effort étant perpendiculaire à la première plaque et à la deuxième plaque.

Dans un mode de réalisation, les moyens de précontrainte comprennent une vis prenant appui sur une première des deux plaques et coopérant avec un taraudage formé dans une deuxième des deux plaques.

Dans un mode de réalisation, l'amortisseur a une enveloppe extérieure de forme parallélépipédique.

Dans un mode de réalisation, la structure alvéolaire est sur une première face de l'un des amortisseurs et est traversante de la première face de l'amortisseur à une deuxième face parallèle à la première face.

Dans un mode de réalisation, la première face et la deuxième face sont perpendiculaires à la première plaque et la deuxième plaque.

Dans un mode de réalisation, deux des amortisseurs sont distants l'un de l'autre.

Dans un mode de réalisation, un axe vertical passant par le centre de gravité de l'équipement est situé entre les deux amortisseurs.

Dans un mode de réalisation, deux des amortisseurs sont identiques.

Dans un mode de réalisation, la structure alvéolaire est régulière ou aléatoire.

Dans un mode de réalisation, la structure alvéolaire a des parois verticales perpendiculaires à la première extrémité et la deuxième extrémité ou des parois verticales inclinées par rapport à la première extrémité et la deuxième extrémité.

Dans un mode de réalisation, la structure alvéolaire est une structure rectangulaire, une structure nid d'abeille ou une structure en v.

Dans un mode de réalisation, au moins un des amortisseurs est fait de polyuréthane thermoplastique.

### BRÈVE DESCRIPTION DES DESSINS

L'invention sera mieux comprise et d'autres avantages apparaîtront à la lecture de la description qui va suivre donnée à titre non limitatif et grâce aux figures parmi lesquelles :
[Fig.1] la figure 1 illustre un exemple de support pour montage d'un équipement sur un châssis ;
[Fig. 2] la figure 2 illustre un exemple de support pour montage d'un équipement sur un châssis vu de dessus ;
[Fig. 3] la figure 3 illustre un exemple de support pour montage d'un équipement sur un châssis vu de profil, coupe A-A ;
[Fig. 4] la figure 4 illustre un exemple de support pour montage d'un équipement sur un châssis vu de profil, coupe B-B ;
[Fig. 5] la figure 5 illustre un exemple de support pour montage d'un équipement sur un châssis vu de dessus, coupe C-C ;
[Fig. 6] la figure 6 illustre un exemple de support pour montage d'un équipement sur un châssis vu en coupe ; et
[Fig. 7] la figure 7 illustre deux exemples d'amortisseurs monobloc.

### DESCRIPTION DÉTAILLÉE

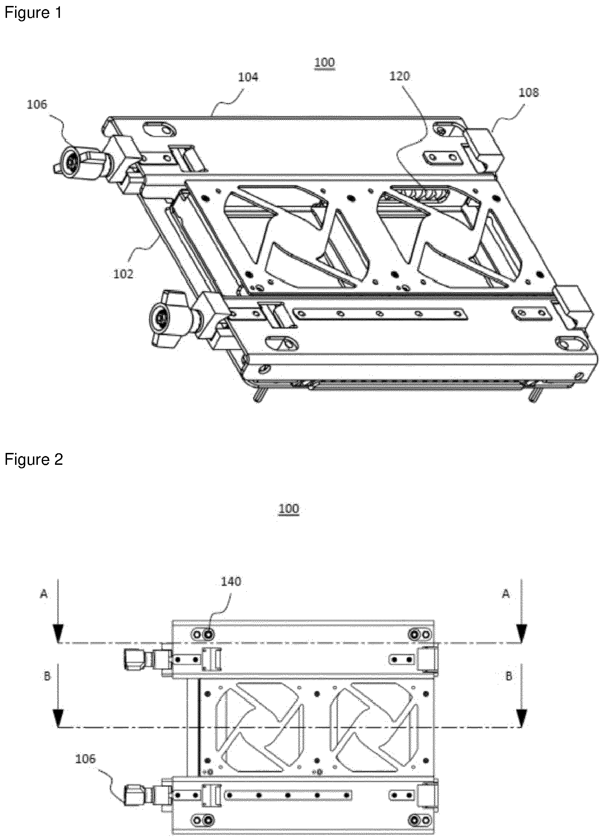

Les figures 1 à 6 illustrent un exemple de support 100 pour montage d'un équipement sur un châssis 130 avec différentes vues.

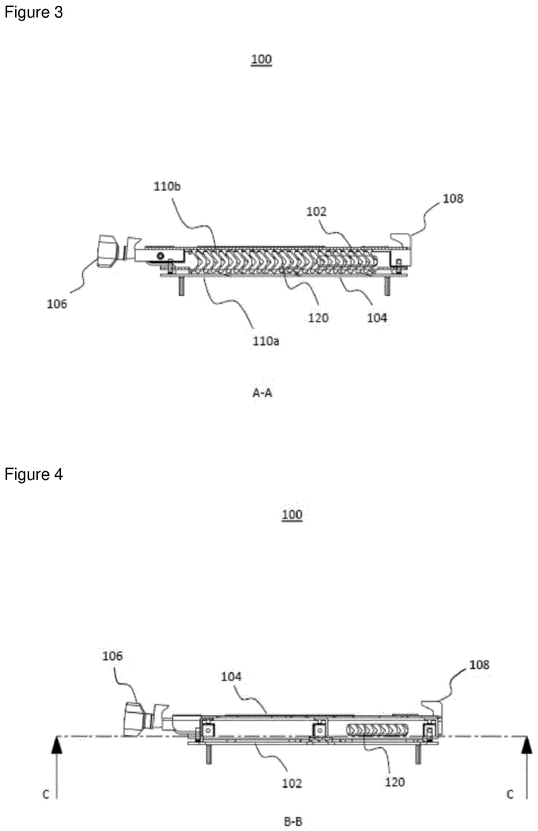

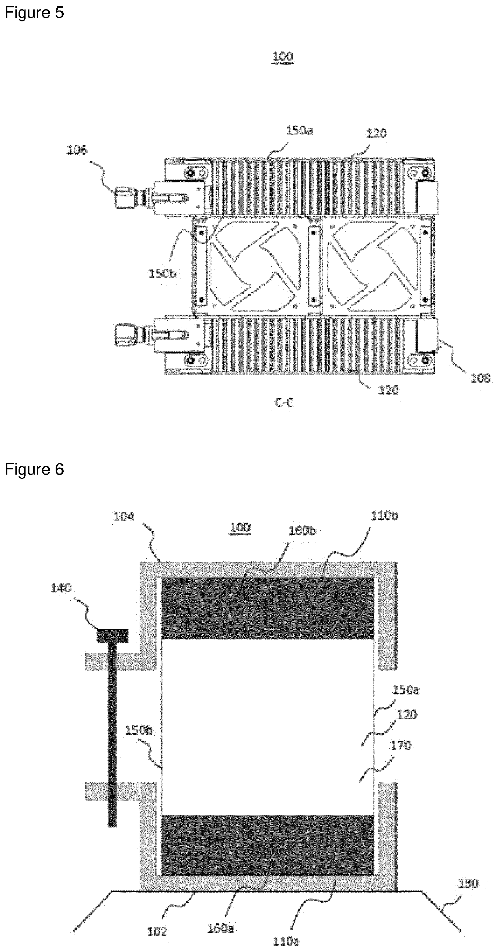

Comme illustré dans les figures 1 et 5, le support 100 comprend une première plaque 102, une deuxième plaque 104 et deux amortisseurs monobloc 120. La première plaque est configurée pour être fixée sur un châssis 130, comme par exemple illustré dans la figure 6. Par exemple, la première plaque 102 peut être fixée par des moyens de fixation tels que des vis ou bridée avec des brides sur le châssis d'un véhicule, en particulier un véhicule terrestre. Une deuxième plaque 104 est configurée pour que l'équipement soit fixé dessus. Comme illustré dans les figures 1 et 4, le support 100 peut comprendre des brides mobiles 106 et des brides fixes 108. L'équipement est positionné en butée contre les brides fixes 108 et les brides mobiles viennent verrouiller la position de l'équipement afin de le fixer sur la deuxième plaque 104. Le verrouillage peut être réalisé au moyen d'un système vis-écrou. Bien que dans cet exemple deux brides mobiles 106 soient représentées, chacune disposée en regard d'une bride fixe 108, dans un autre exemple, le support 100 peut comprendre une seule bride mobile 106 assurant le verrouillage de la position de l'équipement en appui contre deux brides fixes 108. De plus, dans un autre exemple, des moyens de fixation tels que des vis, des sabots de fixation ou des rails de guidage peuvent être utilisés pour fixer directement ou indirectement l'équipement sur la deuxième plaque 104. L'équipement fixé sur la deuxième plaque 104 peut être par exemple un équipement électronique, ou tout autre équipement sensible aux vibrations.

Dans l'exemple illustré dans les figures 1 à 5, le support 100 comprend deux amortisseurs monobloc 120. Dans un autre exemple, le support 100 peut comprendre un amortisseur monobloc 120, par exemple de la largeur de la première plaque 102 et/ou deuxième plaque 104. Dans un autre exemple, le support 100 peut comprendre trois ou plus amortisseurs monobloc 120. Comme illustré dans la figure 3 représentant le support 100 vu de profil en coupe A-A, les deux amortisseurs monobloc 120 s'étendent entre une première extrémité 110a fixée à la première plaque 102 et une deuxième extrémité 110b fixée à la deuxième plaque 104. Par exemple, les amortisseurs monoblocs 120 peuvent être fixés de façon démontable à la deuxième plaque 104 afin de faciliter leur interchangeabilité. La fixation démontable peut être assurée au moyen de brides réalisées dans la géométrie des deux plaques 102, 104. Les amortisseurs monobloc 120 ont une structure alvéolaire. Comme illustré dans la figure 5 illustrant le support 100 vu de dessus en coupe C-C et la figure 6 illustrant le support 100 dans un plan perpendiculaire de coupe A-A et C-C, les amortisseurs monobloc 120 ont une enveloppe extérieure de forme parallélépipédique. De plus, la structure alvéolaire est traversante de part en part d'une première face 150a de l'amortisseur à une deuxième face 150b de l'amortisseur, la première face 150a étant parallèle à la deuxième face. Dans cet exemple, la première face 150a et la deuxième face 150b sont perpendiculaires à la première plaque 102 et à la deuxième plaque 104.

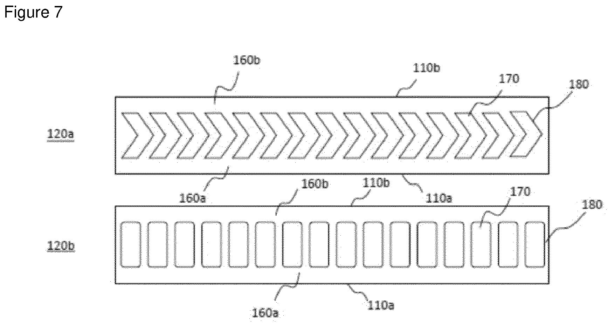

La figure 7 représente deux exemples d'amortisseurs monobloc 120a, 120b. Chaque amortisseur monobloc 120a, 120b comprend une première partie pleine 160a, une partie alvéolaire 170 et une deuxième partie pleine 160b, la première extrémité 110a étant une extrémité de la première partie pleine 160a, la deuxième extrémité 110b étant une extrémité de la deuxième partie pleine 160b et la partie alvéolaire 170 étant entre la première partie pleine 160a et la deuxième partie pleine 160b. La structure alvéolaire peut avoir des parois verticales 180 perpendiculaires aux extrémités 110a, 110b. Par exemple, l'amortisseur monobloc 120b a une structure alvéolaire rectangulaire ayant des parois verticales 180 étant perpendiculaires aux extrémités 110a, 110b. Alternativement, la structure alvéolaire peut avoir des parois verticales 180 inclinées par rapport aux extrémités 110a, 110b. Par exemple, l'amortisseur monobloc 120b a une structure alvéolaire en v. Dans un autre exemple, la structure alvéolaire ayant des parois verticales 180 inclinées par rapport aux extrémités 110a, 110b peut être une structure alvéolaire en nid d'abeille. Les amortisseurs monoblocs 120a, 120b peuvent être fabriqués par exemple par impression 3D.

L'impression 3D permet d'adapter structure alvéolaire aux caractéristiques de l'environnement dans lequel l'équipement est utilisé et de l'équipement lui-même. Cela permet de réaliser des amortisseurs monoblocs dissymétriques si besoin. Ainsi, la masse effective supportée par chaque amortisseur monobloc peut être prise en compte en fonction du positionnement du centre de gravité de l'équipement sur la deuxième plaque. Cela permet d'assurer une homogénéité de l'atténuation vibratoire. De plus, l'impression 3D permet de fabriquer facilement des amortisseurs monoblocs qui sont adaptables et changeable pour différents équipements.

L'amortisseur monobloc 120 permet de filtrer des hautes fréquences de vibrations (c'est-à-dire supérieures à 100 Hz) tout en limitant le débattement de l'équipement engendré par un mode propre du système amorti en réaction à des mouvements du véhicule sur lequel le support 100 est fixé. En effet, la structure alvéolaire de l'amortisseur monobloc 120 permet de filtrer les hautes fréquences de vibrations et de limiter le débattement dans les trois axes x, y et z. Plus précisément, les parois de la partie alvéolaire 170 permettent de dissiper une énergie et donc de filtrer l'excitation transmise par le véhicule (un mouvement porteur et/ou des chocs) au moyen d'un phénomène de déformations locales spécifiques à la géométrie de la structure alvéolaire. Au contraire, les parties pleines 160a, 160b ont un débattement minimal permettant également de limiter le volume vide requis entourant le support 100.

Concernant les exemples d'amortisseurs monobloc 120a, 120b illustrés dans la Figure 7, la structure alvéolaire rectangulaire de l'amortisseur monobloc 120b est plus simple à réaliser que la structure en v de l'amortisseur monobloc 120a. Cependant, les parois verticales 180 inclinées de la structure en v sont plus longues que les parois verticales 180 de la structure rectangulaire et peuvent se déformer plus facilement. Ainsi, l'amortisseur monobloc 120a ayant une structure alvéolaire en v permet ainsi de dissiper une plus grande quantité d'énergie que l'amortisseur monobloc 120b ayant une structure alvéolaire rectangulaire.

Les amortisseurs monobloc 120 peuvent être fait d'un matériau souple, comme par exemple le polyuréthane thermoplastique, ou en élastomère thermoplastique (par exemple styrène butadiène copolymère ou thrempoplastic copolyester).

Comme illustré dans la figure 5, les deux amortisseurs monobloc 120 peuvent être disposés parallèlement, chacun à une extrémité du support 100. Dans un autre exemple, le support peut comprendre trois ou plus amortisseurs monobloc 120 étant parallèles. De plus, comme illustré dans la figure 5, dans lequel deux des amortisseurs sont distants l'un de l'autre. Ainsi, en étant distants l'un de l'autres, il est possible de placer des équipements entre les deux amortisseurs. De plus, dans un exemple, un axe vertical passant par le centre de gravité de l'équipement est situé entre les deux amortisseurs 120 qui sont distants l'un de l'autre. Deux amortisseurs monoblocs 120 parallèles, et notamment distants l'un de l'autre avec un axe vertical passant par le centre de gravité de l'équipement situé entre les deux amortisseurs, permettent une meilleure stabilité, notamment pour des équipements ayant une forte excentricité du centre de gravité. De plus, il est possible de placer des équipements additionnels (tels que par exemple des câble ou des flux aérauliques entre les deux amortisseurs, ou encore un ventilateur) entre les deux amortisseurs. Ces équipements additionnels peuvent être nécessaires au fonctionnement des équipements fixés sur la deuxième plaque. Dans cet exemple, les deux amortisseurs monobloc 120 peuvent être identiques. Cependant, dans un autre exemple, les deux amortisseurs peuvent être différents. Par exemple, les amortisseurs monobloc 120 peuvent avoir une structure alvéolaire différente ou être composé d'un matériau différent.

Comme illustré dans les figures 2 et 6, la deuxième plaque 104 comprend des moyens de précontrainte 140 permettant d'appliquer un effort permettant de rapprocher la première plaque 102 et la deuxième plaque 104, l'effort étant perpendiculaire à la première plaque 102 et à la deuxième plaque 104. Par exemple, les moyens de précontrainte peuvent comprendre une vis 140 prenant appui sur la première plaque 102 et coopérant avec un taraudage formé dans la deuxième plaque 104, ou inversement. Dans un autre exemple, les moyens de précontrainte 140 peuvent comprendre une bride maintenant en pression les deux plaques 102, 104. Ainsi, les moyens de précontrainte, en appliquant un effort rapprochant les deux plaques 102, 104, permettent de précontraindre l'amortisseur monobloc 120 placé entre les deux plaques 102, 104. En particulier, les moyens de précontrainte 140 permettent de décaler la gamme de fréquences filtrées par l'amortisseur monobloc 120. Par exemple, dépendamment de la précontrainte appliquée sur l'amortisseur monobloc 120, il est possible de sélectionner des une plage de fréquence à amortir en décalant une fréquence de coupure. Dans cet exemple, une vis 140 entre la première plaque 102 et la deuxième plaque 104 peut être utilisée pour précontraindre l'amortisseur monobloc. Il sera compris que d'autres moyens de précontrainte peuvent être utilisés.

Bien que l'invention ait été illustrée et décrite en détail à l'aide d'un mode de réalisation préféré, l'invention n'est pas limitée aux exemples divulgués. D'autres variantes peuvent être déduites par l'homme du métier sans sortir du cadre de protection de l'invention revendiquée. Par exemple, le support 100 a été décrit avec deux amortisseurs monobloc 120 identiques. Cependant, le support 100 peut comprendre un seul amortisseur monobloc 120 oudeux amortisseurs monobloc 120 différents, par exemple ayant une structure alvéolaire différente ou une forme différente. De plus, les structures alvéolaires ne sont données qu'à titre d'exemple. Dans ces exemples, la structure alvéolaire est régulière. Dans un autre exemple, la structure alvéolaire peut être aléatoire (comme par exemple la structure d'une éponge). Dans un autre exemple, une structure alvéolaire ayant des motifs alternés (par exemple rectangulaires et en v) peut être utilisée. L'homme du métier comprend qu'une variété de structures alvéolaires peut être utilisée.

## Revendications

1. Support pour montage d'un équipement sur un châssis (130), le support comprenant :
- une première plaque (102) configurée pour être fixée sur le châssis ;
- une deuxième plaque (104) configurée pour que l'équipement soit fixé dessus ;
- au moins deux amortisseurs monoblocs (120) qui s'étendent entre une première extrémité (110a) fixée à la première plaque et une deuxième extrémité (110b) fixée à la deuxième plaque, les au moins deux amortisseurs ayant une structure alvéolaire et étant disposés parallèlement.

2. Support selon la revendication 1, dans lequel au moins un des amortisseurs monoblocs comprend une première partie pleine (160a), une partie alvéolaire (170) et une deuxième partie pleine (160b), la première extrémité étant une extrémité de la première partie pleine, la deuxième extrémité étant une extrémité de la deuxième partie pleine et la partie alvéolaire étant entre la première partie pleine et la deuxième partie pleine.

3. Support selon la revendication 1 ou la revendication 2, dans lequel le support comprend des moyens de précontrainte (140) permettant d'appliquer un effort permettant de rapprocher la première plaque et la deuxième plaque, l'effort étant perpendiculaire à la première plaque et à la deuxième plaque.

4. Support selon la revendication 3, dans lequel les moyens de précontrainte comprennent une vis prenant appui sur une première des deux plaques (102, 104) et coopérant avec un taraudage formé dans une deuxième des deux plaques (102, 104).

5. Support selon l'une des revendications précédentes, dans lequel l'amortisseur a une enveloppe extérieure de forme parallélépipédique.

6. Support selon la revendication 5, dans lequel la structure alvéolaire est sur une première face (150a) de l'un des amortisseurs et est traversante de la première face de l'amortisseur à une deuxième face (150b) parallèle à la première face.

7. Support selon la revendication 6, dans lequel la première face et la deuxième face sont perpendiculaires à la première plaque et la deuxième plaque.

8. Support selon l'une des revendications précédentes, dans lequel deux des amortisseurs sont distants l'un de l'autre.

9. Support selon la revendication 8, dans lequel un axe vertical passant par le centre de gravité de l'équipement est situé entre les deux amortisseurs.

10. Support selon l'une des revendications précédentes, dans lequel deux des amortisseurs sont identiques.

11. Support selon l'une des revendications précédentes, dans lequel la structure alvéolaire est régulière ou aléatoire.

12. Support selon l'une des revendications précédentes, dans lequel la structure alvéolaire a des parois verticales perpendiculaires à la première extrémité et la deuxième extrémité ou des parois verticales inclinées par rapport à la première extrémité et la deuxième extrémité.

13. Support selon la revendication 11, dans lequel la structure alvéolaire est une structure rectangulaire, une structure nid d'abeille ou une structure en v.

14. Support selon l'une des revendications précédentes, dans lequel au moins un des amortisseurs est fait de polyuréthane thermoplastique.
